# EUROPEAN PATENT SPECIFICATION

(11) **EP 3 113 411 B1**
(45) Date of publication and mention of the grant of the patent: **15.08.2018**
(21) Application number: 14883938.4
(22) Date of filing: 11.06.2014
(51) Int. Cl.: H04L 12/18, H04L 29/06

(54) **MULTI-TERMINAL COMMUNICATION METHOD, DEVICE AND COMPUTER STORAGE MEDIUM**
KOMMUNIKATIONSVERFAHREN MIT MEHREREN ENDGERÄTEN, VORRICHTUNG SOWIE COMPUTERSPEICHERMEDIUM
PROCÉDÉ DE COMMUNICATION MULTI-TERMINAUX, DISPOSITIF ET SUPPORT D'INFORMATIONS INFORMATIQUE

(30) Priority: 28.02.2014 CN 201410073536
(43) Date of publication of application: 04.01.2017
(73) Proprietor: ZTE Corporation, Shenzhen, Guangdong 518057 (CN)
(72) Inventor: HU, Yidong, Shenzhen Guangdong 518057 (CN)
(74) Representative: Brevalex
(86) International application number: PCT/CN2014/079673
(87) International publication number: WO 2015/127727

(56) References cited:
- EP-A1- 1 876 790
- EP-A1- 2 202 934
- CN-A- 1 664 872
- CN-A- 101 107 831
- CN-A- 101 116 359
- CN-A- 101 453 524

## Description

### TECHNICAL FIELD

The present disclosure relates to the technical field of communications, and in particular to a multi-terminal communication method and device, and a computer storage medium.

### BACKGROUND

In the prior art, a user terminal can implement rapid alarm and call emergency services through a communication system. A user sets one or more call numbers such as a police phone number and an emergency contact phone number, for the user terminal via the communication system in advance. A user dials the set numbers successively. If the first number is not dialed successfully, the second number is dialed until all of the preset call numbers are dialed completely. If dialing one of the numbers successfully, the user terminal communicates with a terminal (called terminal) of this number, and will not dial other numbers. When the user terminal is communicating with the called terminal, the called terminal can acquire information of the user terminal, such as information including a position of the user terminal and a call content. Furthermore, the communication system can quickly get the location of the user terminal through remote tracking and positioning the user terminal, and the called terminal acquires the location of the user terminal through acquiring the location information of the user terminal. An existing positioning method mainly adopts an own satellite positioning technology of the user terminal, and after satellite positioning fails, a base station cell positioning technology is adopted. Specifically, the communication system requires the user terminal to report terminal satellite positioning results periodically and continuously, and the communication system receives the terminal satellite positioning results. If satellite positioning for the user terminal fails, the communication system uses base station cell that the user terminal accesses to position the user terminal.

However, in one communication, the user terminal can communicate with only one user terminal (called terminal), and cannot satisfy multi-user access needs, and information of the user terminal cannot be shared among multiple users.

European Patent Application Publication No. EP 1 876 790 A1 discloses a remote control-based data sharing system and method for handheld terminals over a communication network.

European Patent Application Publication No. EP 2 202 934 A1 discloses a multimedia session call control method and Application Server (AS).

### SUMMARY

To address the above issues, the present disclosure provides a multi-terminal communication method and device.

The features of the method and device according to the present disclosure are defined in the independent claims, and the preferable features according to the present invention are defined in the dependent claims.

An embodiment of the present disclosure provides a multi-terminal communication method, including: a multimedia call initiated by a controlled terminal or by one or more control terminals is received; the controlled terminal and the control terminals are allowed to join a multimedia session according to the multimedia call, herein the one or more control terminals are in binding relationship with the controlled terminals; and multimedia communication is performed between the controlled terminal and the control terminals.

According to an embodiment, before the control terminal is allowed to join the multimedia session, the method may further include: when it is determined that the controlled terminal is in a multimedia session, the control terminals are allowed to join the multimedia session.

According to an embodiment, before the control terminal is allowed to join the multimedia session, the method may further include: when it is determined that the controlled terminal is not in a multimedia session, a multimedia session is established so as to allow the controlled terminal and the control terminals to join the established multimedia session.

According to an embodiment, when the multimedia communication is performed between the controlled terminal and the control terminals, the method may further: real-time information of the controlled terminal is sent to the control terminals according to a request for the real-time information from the control terminal; herein, the real-time information includes one or more of: video information, audio information and location information.

According to an embodiment, the location information of the controlled terminal may be location information acquired from location parameters of the controlled terminal.

According to an embodiment, after the controlled terminal is allowed to join the multimedia session, the method may further include: the real-time information of the controlled terminal is recorded until the end of the multimedia communication.

According to an embodiment, after the control terminals are allowed to join the multimedia session, or when the multimedia communication is performed between the controlled terminal and the control terminals, the method may further include: terminals required to be added by the control terminals are added to the multimedia session according to a terminal addition request send by the control terminals, herein the terminals required to be added by the control terminals are control terminals or controlled terminals, and the terminals required to be added by the control terminals are not in other multimedia sessions before being allowed to join the multimedia session.

Another embodiment of the present disclosure provides a multi-terminal communication device, including: a multimedia joining module configured to receive a multimedia call initiated by a controlled terminal or by one or more control terminals, allow the controlled terminal and the control terminals to join a multimedia session according to the multimedia call, herein the one or more control terminals are in binding relationship with the controlled terminals; and a data processing module configured to perform multimedia communication between the controlled terminal and the control terminals.

According to an embodiment, the multimedia joining module is further configured to: when it is determined that the controlled terminal is in a multimedia session, allow the control terminals to join the multimedia session.

According to an embodiment, the multimedia joining module is further configured to: when it is determined that the controlled terminal is not in a multimedia session, establish a multimedia session so as to allow the controlled terminal and the control terminals to join the multimedia session.

According to an embodiment, the data processing module is further configured to: send real-time information of the controlled terminal to the control terminals according to a request for the real-time information from the control terminals; herein, the real-time information includes one or more of: video information, audio information and location information.

According to an embodiment, the device further includes a positioning module configured to: receive location parameters of the controlled terminal, and acquire location information of the controlled terminal from the location parameters.

According to an embodiment, the multimedia joining module is further configured to: record the real-time information of the controlled terminals until the end of the multimedia communication.

According to an embodiment, the multimedia joining module is configured to: add terminals required to be added by the control terminals to the multimedia session according to a terminal addition request send by the control terminals, herein the terminals required to be added by the control terminals are control terminals or controlled terminals, and the terminals required to be added by the control terminals are not in other multimedia sessions before being allowed to join the multimedia session.

Another embodiment of the present disclosure provides a computer storage medium having stored therein instructions that, when executed, cause at least one processor to perform the above multi-terminal communication method.

The embodiments of the disclosure have the benefits as follows.

Each control terminal in the embodiments of the present disclosure is bound with a controlled terminal in advance, and then the control terminals being in binding relationship with the controlled terminal are allowed to join a multimedia session, thereby achieving multi-terminal communication.

### BRIEF DESCRIPTION OF THE DRAWINGS

In the drawings (not necessarily drawn in proportion), similar drawing signs can describe similar parts. Similar drawing signs with different suffix letters can show different examples of similar parts. The drawings generally show all the embodiments discussed herein as examples and not by way of limitation.
Fig. 1 is a schematic diagram of a multi-terminal communication system provided by an embodiment of the present disclosure;
Fig. 2 is a schematic diagram of a multi-terminal binding relationship provided by an embodiment of the present disclosure; and
Fig. 3 is a flow chart of the multi-terminal communication method provided by an embodiment of the present disclosure.

### DETAILED DESCRIPTION

In order to solve the problems in the prior art that a user terminal can communicate with only one user and user terminal information cannot be shared among multiple users, the embodiments of the present disclosure provide a multi-terminal communication method and device and a computer storage medium. In each embodiment of the present disclosure, a multimedia call is received, the multimedia call being initiated by one or more controlled terminal or by one or more control terminals; the controlled terminals and the control terminals are allowed to join a multimedia session according to the multimedia call, wherein the one or more control terminals are in binding relationship with the one or more controlled terminals; and multimedia communication is performed between the controlled terminals and the control terminals.

The disclosure is further illustrated in detail below together with the drawings and the embodiments. It will be appreciated that specific embodiments described herein are merely used to explain the disclosure and do not limit the disclosure.

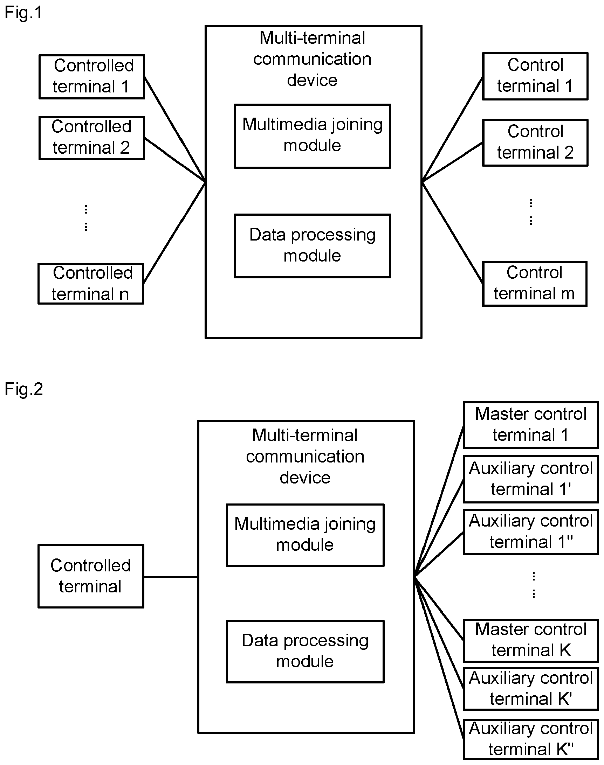

As shown in figure 1, figure 1 is a schematic diagram of the multi-terminal communication system provided by an embodiment of the present disclosure.

A multi-terminal communication system includes: one or more controlled terminals 1 to n (n≥1), a multi-terminal communication device, one or more control terminals 1 to m (m≥1). Herein, one controlled terminal is bound with one or more control terminals. Herein, the controlled terminals and control terminals may be mobile terminals, applications and so on. The mobile terminals, for example, can be mobile phones, tablet computers.

The controlled terminals are configured to perform multimedia communication with the bound control terminals. The multimedia communication is a communication mode that can provide multiple pieces of media information, such as media information in an audio form, a video form, a data and/or text form and other forms, simultaneously in a call process.

The control terminals are configured to perform multimedia communication with the bound controlled terminals, and acquire relevant information about the controlled terminals, such as real-time information of the controlled terminals, multimedia communication records and state information. Please refer to the step S330 for specific content.

The multi-terminal communication device (hereinafter referred to as "device"), is configured to implement the multimedia communication between the control terminals and the controlled terminals, and acquisition of information about the controlled terminals via the control terminals.

The multi-terminal communication device (hereinafter referred to as "device") at least includes: a multimedia joining module and a data processing module.

Specifically, the multimedia joining module is configured to receive a multimedia call initiated by a controlled terminal or by one or more control terminals, and allow the controlled terminal and the control terminals to join a multimedia session. The multimedia joining module is further configured to record a multimedia communication record. Herein, the multimedia call is configured to request for joining the multimedia session. The multimedia session is a channel used to perform multimedia communication.

The data processing module is configured to authenticate the control terminals and the controlled terminal, process data and schedule the modules in a multimedia communication process. That is, the data processing module is configured to perform multimedia communication between multiple terminals. For instance, real-time data and state data of the controlled terminal are sent to the control terminals, notification messages are generated for the control terminals, and the multimedia joining module and a positioning module are invoked.

The multi-terminal communication device may further include a positioning module (not shown in the drawings) configured to acquire location information of the controlled terminal. The positioning module can use positioning algorithm, and calculate the location of the controlled terminal to get location information of the controlled terminal. The positioning algorithm for calculating the controlled terminal location includes, but is not limited to, a satellite aided positioning algorithm, a fingerprint positioning algorithm, a Wi-Fi positioning algorithm, a network fusion positioning algorithm and the like. Position parameters are parameters used to implement positioning algorithm. For example, the controlled terminal gets the location parameters through global positioning system and reports the location parameters to the device. Based on the satellite aided positioning algorithm, the positioning module acquires the location information of the controlled terminal using the location parameters. The positioning module may also obtain the location information of the controlled terminal by positioning the controlled terminal. For instance, the controlled terminal is positioned using a communication base station to obtain the position information of the controlled terminal. Positioning calculation of the controlled terminal is mainly provided by the device, thereby reducing the power consumption of the controlled terminal, prolonging the standby time of the controlled terminal, improving the positioning precision of the controlled terminal, reducing the position requirement of the controlled terminal.

In one embodiment, the types of the control terminals include a master type and an auxiliary type. Herein, the control terminals of the master type are called master control terminals, the control terminals of the auxiliary type are called auxiliary control terminals. So, the control terminal is bound with a controlled terminal, that is, the master control terminal and the auxiliary terminals are bound with the controlled terminal. The master control terminals are configured to set the controlled terminal and the auxiliary control terminals required to be bound, set permissions of the auxiliary control terminals, perform multimedia communication with the bound controlled terminal and the auxiliary control terminals, and acquire relevant information of the controlled terminal. Herein, there may be one or more bound controlled terminals, and there may be one or more bound auxiliary terminals. The permissions of the auxiliary control terminals include, but are not limited to: calling a multimedia access number, acquiring the real-time information, the record of the multimedia communication and status information of the controlled terminals. The auxiliary control terminals are configured to perform multimedia communication with the bound controlled terminals and the master control terminals based on the permissions set by the master control terminals, and acquire the relevant information of the controlled terminals. In order to make clear of the present disclosure, the permissions of the auxiliary control terminals include but are not limited to: calling a multimedia access number, acquiring the real-time information, the record of the multimedia communication and status information of the controlled terminals.

A master control terminal and auxiliary terminals, having a binding relationship therebetween, are taken as a terminal combination, and each controlled terminal can be bound with one or more terminal combinations. As shown in Fig. 2, Fig. 2 is a schematic diagram of the multi-terminal binding relationship provided by an embodiment of the present disclosure. In order to make clear the binding relationship, there is only one controlled terminal bound with the master control terminals and the auxiliary control terminals, the binding relationship between other controlled terminals and the master control terminals and the auxiliary control terminals is similar to Fig. 2.

The controlled terminal is bound with k(k≥1) terminal combinations. For example, xiaoming's terminal is bound with his family members' terminals, like his father's, mother's, grandpa's and grandma's terminals. Herein xiaoming's terminal is the controlled terminal, the family members' terminals are a terminal combination, his father's terminal is the master control terminal, and his mother's, grandpa's and grandma's terminals are the auxiliary control terminals. Xiaoming's terminal is bound with school teachers' terminals, like principal's terminal, the head teacher's terminal and the common teachers' terminals. Herein, xiaoming's terminal is the controlled terminal, school teachers' terminals are a terminal combination, principal's terminal is the master control terminal, and the head teacher's terminal and the common teachers' terminals are the auxiliary control terminals. In this way, xiaoming's terminal is bound with two terminal combinations, which are family members and school teachers.

In another embodiment, the control terminals can only include the master type, that is to say, the control terminals only include the master control terminals. Then the master control terminals only need to set the controlled terminals which needed to be bound.

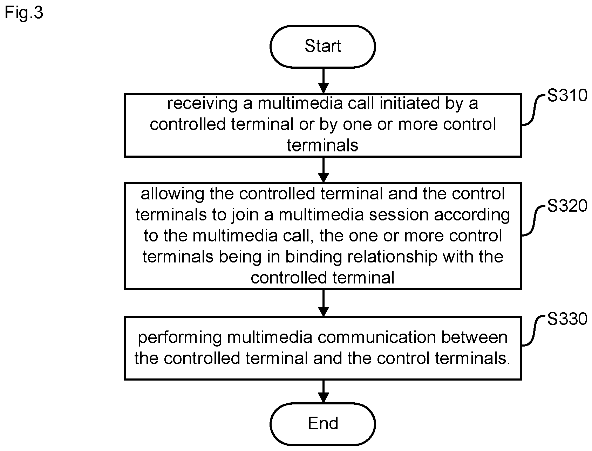

The present disclosure provides a multi-terminal communication method. As shown in Fig. 3, Fig. 3 is a flow chart of the multi-terminal communication method provided by an embodiment of the present disclosure. The above multi-terminal communication system is illustrated in detail based on the multi-terminal communication method.

Step S310, a multimedia call is received, the multimedia call being initiated by a controlled terminal or by one or more control terminals;

The multimedia call refers to that the controlled terminal or the control terminals call a multimedia access number, and the multimedia call is configured to request the device to allow the controlled terminal and the control terminals to join a multimedia session. That is to say, the multimedia call is used to request the device to access the controlled terminal, the master control terminals and/or the auxiliary control terminals to the multimedia session.

Specifically, the control terminals (the master control terminal and the auxiliary control terminals) and the controlled terminal have been registered on the device in advance. The master control terminal logs in the device in advance, registers user information in the device, is bound with the controlled terminal and the auxiliary control terminals, and sets permissions of the auxiliary control terminals. Herein, there may be one or more auxiliary control terminals. The auxiliary control terminals and the controlled terminal only need to register user information in the device. The device allocates unique terminal codes to the registered controlled terminal, master control terminal and auxiliary terminals. When the controlled terminal, the master control terminal and the auxiliary control terminals send information/requests to the device, the terminal codes are carried in the information/requests. For example, the terminal codes of the terminals are contained in the multimedia call, and the device distinguishes different terminals by means of the terminal codes. Furthermore, the device records the controlled terminal, the master control terminal and the auxiliary control terminals, having a binding relationship with one another, the permissions of the auxiliary control terminals and the like by means of the terminal codes, so as to authenticate the master control terminal, the auxiliary control terminals and the controlled terminals. After the master control terminals is bound with the auxiliary control terminals and the controlled terminals, the device pushes the terminal codes of the master control terminal and the auxiliary terminals to the controlled terminal, and pushes the terminal code of the controlled terminal to the master control terminal and the auxiliary terminals.

The device has a multimedia access number, the multimedia access number is used to join the multimedia session. After registration is completed, the device can push the multimedia access number to the master control terminal, the auxiliary control terminals and the controlled terminal. The multimedia access number is stored by the master control terminal, the auxiliary control terminals and the controlled terminal separately. If the multimedia access number of the device changes, a new multimedia access number is pushed again. When the master control terminal, the auxiliary control terminals and the controlled terminal store the multimedia access number in advance, the multimedia call can be directly initiated. The device can send the multimedia access number to the corresponding terminals when the master control terminal, the auxiliary control terminals and the controlled terminal are required to join the multimedia session. When the master control terminal, the auxiliary control terminals and the controlled terminal don't store the multimedia access number in advance, they can send a communication request to the device and acquire the multimedia access number through the communication request, and then initiates a multimedia call.

The multimedia call can be sent by the controlled terminal, or by the master control terminal, or by the auxiliary control terminals. Specifically, when the controlled terminal initiates the multimedia call, the controlled terminal wants to communicate with the master control terminal and the auxiliary control terminals which are bound with it. When the master control terminal initiates a multimedia call for the controlled terminal, the multimedia call carries the own terminal code of the master control terminal and the terminal code of the controlled terminal expecting to perform multimedia communication, the data processing module in the device carries out authentication according to the terminal code of the master control terminal and the terminal code of the controlled terminal. For example, it is determined whether there is a binding relationship between the master control terminal and the controlled terminal, if there is a binding relationship, Step S320 is executed. The auxiliary terminals initiate multimedia calls in a way similar to that of the master control terminal, which can refer to the step that the master control terminal initiates the multimedia call, wherein the auxiliary terminals needs to be authorized by the master control terminal before initiating the multimedia calls. When the controlled terminal initiates a multimedia call, the multimedia call carries the own terminal code of the controlled terminal and the terminal codes of the master control terminal and the auxiliary terminals having a binding relationship with the controlled terminal. There may be one or more master control terminals and auxiliary terminals. The data processing module in the device carries out authentication according to the terminal codes of the master control terminals, the auxiliary terminals and the controlled terminal. For example, it is determined whether the master control terminals, the auxiliary terminals and the controlled terminal have a binding relationship, and if so, Step S320 is executed.

In an embodiment, when or before the controlled terminal initiates the multimedia calls the controlled terminal sends a help request to the device. The help request is used to request the device to notify one or more control terminals bound with the controlled terminal that the controlled terminal needs to start the multimedia communication. The help request can includes the location parameters of the controlled terminal. The device receives the help request. For example, the data processing module receives the help request, and queries whether the help request includes the location parameters of the controlled terminal. If there are location parameters in the help request, the location parameters are exatacted, and the positioning module is invoked to calculate the location of the controlled terminal. If there are not location parameters in the help request, the positioning module is invoked to posisiton the controlled terminal, so as to acquire the location information of the controlled terminal. The data processing module uses the location information of the controlled terminal to form a help notification message, and sends the help notification message to the control terminals bound with the controlled terminal. The control terminal, by checking the help notification message, can know that the controlled terminal needs to carry out multimedia communication and can know the location of the controlled terminal.

Step S320, the controlled terminal and the control terminals are allowed to join a multimedia session according to the multimedia call, herein the one or more control terminals are in binding relationship with the controlled terminal.

When the controlled terminal initiates a multimedia call, according to a received multimedia access number or according to a pre-stored multimedia access number, the controlled terminal calls the multimedia access number. The multimedia joining module receives the call, and establishes the multimedia session, so as to allow the controlled terminal to join the multimedia session. The multimedia joining module calls a master control terminal and auxiliary terminals bound with the controlled terminal, so as to allow the master control terminal and the auxiliary terminals to join the multimedia session.

When calling of the master control terminal and/or the auxiliary terminals fails, the multimedia joining module generates a call failure message and sends it to the data processing module, and the data processing module forms a call failure notification message based on the call failure message and is responsible for sending the call failure notification message to the master control terminal and/or the auxiliary terminals which are called unsuccessfully.

When a control terminal initiates a multimedia call, according to a received multimedia access number or according to a pre-stored multimedia access number, the control terminal calls the multimedia access number. The data processing module queries whether the controlled terminal is in a multimedia session; if the controlled terminal is in a multimedia session, one or more control terminals are allowed to join the multimedia session; and if the controlled terminal is not in a multimedia session, a multimedia session is established, such that the controlled terminal and the one or more control terminals are allowed to join the multimedia session. Herein, the multimedia joining module can establish a plurality of multimedia sessions simultaneously, each multimedia session has a unique serial number. When the controlled terminal is in a multimedia session, according to the serial number of the multimedia session, the multimedia joining module can allow the one or more control terminals to join the multimedia session having the serial number.

Step S330, multimedia communication is performed between the controlled terminal and the control terminals.

During the multimedia communication, the device can provide multiple pieces of multimedia information such as media information in an audio form, a video form, a data and/or text form and other forms. The control terminals can select any one or more pieces of media information from the multiple pieces of media information. For example, the control terminals select audios, videos and data for communication. The data may be, for example, location data of the controlled terminal.

In a multi-terminal communication process, a master control terminal and auxiliary terminals can obtain real-time information of the controlled terminal. Specifically, the master control terminal and the auxiliary terminals send a request for the real-time information to the device, the request for the real-time information being configured for the device to return the real-time information of the controlled terminal. Furthermore, the request for the real-time information may include an audio information request, a video information request and a position information request, herein the audio information request is configured to request the device to return audio information of the controlled terminal, the video information request is configured to request the device to return video information of the controlled terminal, and the position information request is configured to request the device to return position information of the controlled terminal. For instance, after selecting audio communication, the master control terminal expects to get the video information of the controlled terminal, so the video information request is sent. In this case, the master control terminal can perform audio communication and video communication with the controlled terminal, and can check the audio information and video information of the controlled terminal.

For example, Xiaoming's father, mother and grandfather take him to play at an amusement park. When his grandfather takes him, Xiaoming gets lost and then calls a multimedia access number of an apparatus using a mobile phone. Dad, mum and grandfather receive the call from the multimedia access number at the same time. When dad selects an audio and video mode to communicate with him by means of mobile phone, sees that xiaoming is still at the amusement park, and observes that he stands nearby a pirate ship. His grandfather communicates with him in an audio mode. His mother does not answer the call, but continues determining his position in a data communication mode instead, and checks his movement track. When observing that he does not move, his mother communicates with his father and grandfather in an audio mode, and notifies his father and grandfather of the observed situation. Meanwhile, his father describes the observed video situations. They approach Xiaoming from different directions and find him finally. The device allows several people (several terminals) to communicate at the same time, to share real-time information of the controlled terminal and to record the real-time information of the controlled terminal, thereby improving the effectiveness in problem solving by the control terminals.

In a multi-terminal communication process, the master control terminal and the auxiliary terminals can obtain state information about the controlled terminal. The state information at least includes low electricity, switching off, switching on and the like.

When multimedia communication is performed between the controlled terminal and the control terminals, the multimedia joining module records a multimedia communication record. The multimedia communication record includes: real-time information of the controlled terminal and the control terminals. The real-time information at least includes one or more of audio information, video information and location information.

In one embodiment, when the controlled terminal joins a multimedia session, the multimedia joining module will start to record the real-time information of the controlled terminal until multimedia communication is ended, and the recorded real-time information forms a multimedia communication record. The finally formed multimedia communication record may further include the real-time information of the control terminals. For instance, after getting lost, Xiaoming actively calls a multimedia access number via a controlled terminal, and expects to perform multimedia communication with a master control terminal of his father and auxiliary terminals of his mother and grandfather. The device receives the call from Xiaoming, allows him to join a multimedia session, and calls his father, mother and grandfather to join the multimedia session. However, all of his father, mother and grandfather do not answer the call from the device, so they cannot join the multimedia session temporarily. In order not to miss any information relevant to Xiaoming, when he joins the multimedia session, the device starts to record his real-time information, and a finally formed multimedia communication record contains the real-time information. His father, mother and grandfather can obtain the real-time information by checking the multimedia communication record.

After multi-terminal communication is ended, the multimedia communication record of the controlled terminal is sent to the control terminals; or the multimedia communication record of the controlled terminal is sent to the control terminals according to requests for communication content from the control terminals. Furthermore, when multi-terminal communication is ended, the device stops recording the multimedia communication record, the data processing module in the device can notify the master control terminal that recording of the multimedia communication record has accomplished, and when the master control terminal needs to obtain the multimedia communication record, the data processing module acquires a multimedia communication record recorded by the multimedia joining module and sends the multimedia communication record to a master control module, in order that the master control module checks audio, video and location information relevant to the controlled terminal.

In one embodiment, the master control terminal of the control terminals can set the movement area of the controlled terminal in the device in advance, and the movement area is a geographic area. When multimedia communication is performed between the controlled terminal and the control terminals or after the controlled terminal has been registered, the controlled terminal reports a location parameter to the device periodically, the device compares the location parameter of the controlled terminal with the movement area, and when the location of the controlled terminal is not within the movement area, the device notifies the control terminals.

In another embodiment, the device makes a local real-time information recording policy in advance and issues the local real-time information recording policy to the controlled terminal, herein the local real-time information recording policy refers to that the controlled terminal records own real-time information under a preset network state to form a local record, when the network state changes to a state other than the preset network state, the controlled terminal sends the local record to the device, and the device completes subsequent steps. For instance, when a network is interrupted, the controlled terminal cannot perform multimedia communication with the control terminals. In this case, the controlled terminal starts the local real-time information recording policy, records real-time information to form a local record, and uploads the local record to the apparatus after the network is smoothened, and then the device sends the local record to the control terminals. The controlled terminal locally records real-time information in the case of no service, thereby ensuring the completeness of information and providing a strong help for solving the problem by the control terminals.

In yet another embodiment, after the control terminals join the multimedia session or when multimedia communication is performed between the controlled terminal and the control terminals, the device adds terminals, required to be added by the control terminals, to the multimedia session according to terminal addition requests sent by the control terminals, herein the terminals required to be added include control terminals or controlled terminal, and the terminals required to be added are not in other multimedia sessions before being allowed to join the multimedia session. Multimedia communication is performed among the control terminals, the controlled terminal and the added terminals. Specifically, when a control terminal A accesses multimedia communication and is performing multimedia communication with a controlled terminal B, if expecting to perform multimedia communication with a controlled terminal C or expecting to share real-time information of the controlled terminal with a control terminal D, the control terminal A can send a terminal addition request to the device. The controlled terminal addition request carries a terminal code of the control terminal A and a terminal code of a terminal required to be added, such as a terminal code of the controlled terminal C or a terminal code of the control terminal D. The data processing module in the device queries whether the terminal required to be added is in a multimedia session, if so, addition fails, and if not, the multimedia joining module adds the terminal to the multimedia session according to the terminal addition request. Furthermore, when the added terminal is the controlled terminal C, during multimedia communication, the control terminal A can acquire real-time information, multimedia communication records, state information and the like of the controlled terminal B and of the controlled terminal C simultaneously. When the added terminal is the control terminal D, during multimedia communication, the control terminal A and the control terminal D can acquire real-time information, a multimedia communication record, state information and the like of the controlled terminal B simultaneously. For instance, a terminal of a father is a control terminal, and terminals of his son Xiaoming and daughter Xiaohua are controlled terminals. When performing multimedia communication with Xiaoming, father also wants to know about Xiaohua. In this case, father sends a controlled terminal addition request to the device and expects to add Xiaohua to a multimedia session where he is already in, and the device queries that Xiaohua is not in any multimedia session and adds Xiaohua to the multimedia session where her father is already in, thereby achieving multimedia communication among the father, Xiaoming and Xiaohua.

Further, there may be one or more terminals required to be added by the control terminals, and the added terminals can be in a bonding relationship with the control terminals or not. When the multimedia communication is over, if the added terminals are in a bonding relationship with the control terminals, the added terminal can initiate multimedia calls for the control terminals. When the multimedia communication is over, if the added terminals are not in a bonding relationship with the control terminals, the additive terminals cannot initiate multimedia calls for the control terminals.

In the embodiments of the present disclosure, each control terminals is bound with the controlled terminals in advance, and then the control terminals being in relationship with the controlled terminals are allowed to join the multimedia session, thereby realizing multi-terminal communication.

In addition, in the multi-terminal communication process, each control terminal is provided with real-time information of the controlled terminal, such that all control terminals share the real-time information, thereby improving the usage rate of the real-time information.

Those skilled in the art shall understand that the embodiments of the disclosure may be provided as a method, a system or a computer program product. Thus, forms of hardware embodiments, software embodiments or embodiments integrating software and hardware may be adopted in the disclosure. Moreover, a form of the computer program product implemented on one or more computer available storage media (including, but are not limited to, a disk memory, an optical memory and the like) containing computer available program codes may be adopted in the disclosure.

The disclosure is described with reference to flow charts and/or block diagrams of the method, the device (system) and the computer program product according to the embodiments of the disclosure. It will be appreciated that each flow and/or block in the flow charts and/or the block diagrams and a combination of the flows and/or the blocks in the flow charts and/or the block diagrams may be implemented by computer program instructions. These computer program instructions may be provided for a general computer, a dedicated computer, an embedded processor or processors of other programmable data processing devices to generate a machine, such that an apparatus for implementing functions designated in one or more flows of the flow charts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, such that a manufactured product including an instruction apparatus is generated via the instructions stored in the computer readable memory, and the instruction apparatus implements the functions designated in one or more flows of the flow charts and/or one or more blocks of the block diagrams.

These computer program instructions may also be loaded to the computers or the other programmable data processing devices, such that processing implemented by the computers is generated by executing a series of operation steps on the computers or the other programmable devices, and therefore the instructions executed on the computers or the other programmable devices provide a step of implementing the functions designated in one or more flows of the flow charts and/or one or more blocks of the block diagrams.

Although the particular preferred embodiments of the invention have been disclosed in detail for illustrative purposes, those skilled in the art will be aware of possibilities of various improvements, additions and replacements. As a result, the scope of the disclosure shall not be limited to the above embodiments.

## Claims

1. A multi-terminal communication method, comprising:
receiving a multimedia call initiated by a controlled terminal or by a plurality of control terminals (S310);
allowing the controlled terminal and the control terminals to join and record a multimedia session according to the multimedia call, wherein the control terminals are in binding relationship with the controlled terminal (S320); and
performing multimedia communication between the controlled terminal and the control terminals (S330),
wherein the control terminals perform multimedia communication with the bound controlled terminal, and acquire relevant information about the controlled terminal, the relevant information being real-time information, multimedia communication records and state information of the controlled terminals, wherein the multimedia communication records include real-time information of the controlled terminal and the control terminals, wherein the multimedia call is configured to request for joining the multimedia session that is a channel used to perform multimedia communication, and the multimedia communication is a communication mode that can provide multiple pieces of media information in a data form and/or text form, simultaneously in a call process, the media information in the data form being real-time location data of the controlled terminal,
and wherein the control terminals and the controlled terminal are registered in advance, and each of the plurality of control terminals is bound with the controlled terminal in advance.

2. The method as claimed in claim 1, further comprising: before allowing the control terminals to join the multimedia session,
when it is determined that the controlled terminal is in a multimedia session, allowing the control terminals to join the multimedia session.

3. The method as claimed in claim 1, further comprising: before allowing the control terminals to join the multimedia session,
when it is determined that the controlled terminal is not in a multimedia session, establishing a multimedia session so as to allow the controlled terminal and the control terminals to join the established multimedia session.

4. The method as claimed in claim 1, further comprising: when performing the multimedia communication between the controlled terminal and the control terminals,
sending real-time information of the controlled terminal to the control terminals according to a request for the real-time information from the control terminals, wherein the real-time information comprises one or more of: video information, audio information and location information.

5. The method as claimed in claim 4, wherein the location information of the controlled terminal is location information acquired from location parameters of the controlled terminal.

6. The method as claimed in claim 4, further comprising: after allowing the controlled terminal to join the multimedia session,
recording the real-time information of the controlled terminal until the end of the multimedia communication.

7. The method as claimed in claim 1, further comprising: after allowing the control terminals to join the multimedia session, or when performing the multimedia communication between the controlled terminal and the control terminals,
adding terminals required to be added by the control terminals to the multimedia session according to a terminal addition request send by the control terminals, wherein the terminals required to be added by the control terminals are control terminals or controlled terminals, and the terminals required to be added by the control terminals are not in other multimedia sessions before being allowed to join the multimedia session.

8. A multi-terminal communication device, comprising:
a multimedia joining module configured to: receive a multimedia call initiated by a controlled terminal or by a plurality of control terminals, allow the controlled terminal and the control terminals to join and record a multimedia session according to the multimedia call, wherein the control terminals are in binding relationship with the controlled terminal; and
a data processing module configured to perform multimedia communication between the controlled terminal and the control terminals,
wherein the control terminals perform multimedia communication with the bound controlled terminal, and acquire relevant information about the controlled terminal, the relevant information being real-time information, multimedia communication records and state information of the controlled terminals, wherein the multimedia communication records include real-time information of the controlled terminal and the control terminals, wherein the multimedia call is configured to request for joining the multimedia session that is a channel used to perform multimedia communication, and the multimedia communication is a communication mode that can provide multiple pieces of media information in a data form and/or text form, simultaneously in a call process, the media information in the data form being real-time location data of the controlled terminal,
and wherein the control terminals and the controlled terminal are registered in advance, and each of the plurality of control terminals is bound with the controlled terminal in advance.

9. The device as claimed in claim 8, wherein the multimedia joining module is further configured to: when it is determined that the controlled terminal is in a multimedia session, allow the control terminals to join the multimedia session.

10. The device as claimed in claim 8, wherein the multimedia joining module is further configured to: when it is determined that the controlled terminal is not in a multimedia session, establish a multimedia session so as to allow the controlled terminal and the control terminals to join the established multimedia session.

11. The device as claimed in claim 8, wherein the data processing module is further configured to:
send real-time information of the controlled terminal to the control terminals according to a request for the real-time information from the control terminals, wherein the real-time information comprises one or more of: video information, audio information and location information.

12. The device as claimed in claim 11, further comprising: a positioning module configured to: receive location parameters of the controlled terminal, and acquire location information of the controlled terminal from the location parameters.

13. The device as claimed in claim 11, wherein the multimedia joining module is further configured to: record the real-time information of the controlled terminal until the end of the multimedia communication.

14. The device as claimed in claim 8, wherein the multimedia joining module is further configured to: add the terminals required to be added by the control terminals to the multimedia session according to the terminal addition request send by the control terminals, wherein the terminals required to be added by the control terminals are control terminals or controlled terminals, and the terminals required to be added by the control terminals are not in other multimedia sessions before being allowed to join the multimedia session.

15. A computer storage medium having stored therein instructions that, when executed, cause at least one processor to perform the multi-terminal communication method as claimed in any one of claims 1 to 7.

## Patentansprüche

1. Mehrfach-Endgerät-Kommunikationsverfahren, umfassend:
Empfangen eines Multimediarufs, der durch ein gesteuertes Endgerät oder durch eine Mehrzahl von Steuerungsendgeräten initiiert worden ist (S310);
Ermöglichen, dass das gesteuerte Endgerät und die Steuerungsendgeräte gemäß dem Multimediaruf an einer Multimediasitzung teilnehmen und diese aufzeichnen, wobei die Steuerungsendgeräte in einer Verbindungsbeziehung mit dem gesteuerten Endgerät stehen (S320); und
Durchführen einer Multimediakommunikation zwischen dem gesteuerten Endgerät und den Steuerungsendgeräten (S330),
wobei die Steuerungsendgeräte eine Multimediakommunikation mit dem verbundenen gesteuerten Endgerät durchführen und relevante Informationen über das gesteuerte Endgerät erfassen, wobei die relevanten Informationen Echtzeitinformationen, Multimediakommunikationsaufzeichnungen und Statusinformationen der gesteuerten Endgeräte sind,
wobei die Multimediakommunikationsaufzeichnungen Echtzeitinformationen über das gesteuerte Endgerät und die Steuerungsendgeräte umfassen,
wobei der Multimediaruf so ausgebildet ist, dass er eine Teilnahme an der Multimediasitzung abruft, bei der es sich um einen Kanal handelt, der zur Durchführung einer Multimediakommunikation verwendet wird, und die Multimediakommunikation ein Kommunikationsmodus ist, der eine Mehrzahl von Teilen von Multimediainformationen in einer Datenform und/oder Textform gleichzeitig in einem Rufvorgang bereitstellen kann, wobei die Medieninformationen in der Datenform Echtzeitpositionsdaten des gesteuerten Endgeräts sind,
und wobei die Steuerungsendgeräte und das gesteuerte Endgerät im Vorhinein registriert werden und jedes der Mehrzahl von Steuerungsendgeräten im Vorhinein mit dem gesteuerten Endgerät verbunden wird.

2. Verfahren nach Anspruch 1, das ferner vor dem Ermöglichen, dass die Steuerungsendgeräte an der Multimediasitzung teilnehmen, umfasst,
dass dann, wenn bestimmt wird, dass sich das gesteuerte Endgerät in einer Multimediasitzung befindet, ermöglicht wird, dass die Steuerungsendgeräte an der Multimediasitzung teilnehmen.

3. Verfahren nach Anspruch 1, das ferner vor dem Ermöglichen, dass die Steuerungsendgeräte an der Multimediasitzung teilnehmen, umfasst,
dass dann, wenn bestimmt wird, dass sich das gesteuerte Endgerät nicht in einer Multimediasitzung befindet, eine Multimediasitzung erstellt wird, so dass das gesteuerte Endgerät und die Steuerungsendgeräte an der erstellten Multimediasitzung teilnehmen können.

4. Verfahren nach Anspruch 1, das ferner beim Durchführen der Multimediakommunikation zwischen dem gesteuerten Endgerät und den Steuerungsendgeräten
das Senden von Echtzeitinformationen des gesteuerten Endgeräts zu den Steuerungsendgeräten gemäß einer Anfrage für die Echtzeitinformationen von den Steuerungsendgeräten umfasst, wobei die Echtzeitinformationen eines oder mehrere von Videoinformationen, Audioinformationen und Positionsinformationen umfassen.

5. Verfahren nach Anspruch 4, bei dem die Positionsinformationen des gesteuerten Endgeräts Positionsinformationen sind, die von Positionsparametern des gesteuerten Endgeräts erfasst worden sind.

6. Verfahren nach Anspruch 4, das ferner nach dem Ermöglichen, dass das gesteuerte Endgerät an der Multimediasitzung teilnimmt,
das Aufzeichnen der Echtzeitinformationen des gesteuerten Endgeräts bis zum Ende der Multimediakommunikation umfasst.

7. Verfahren nach Anspruch 1, das ferner nach dem Ermöglichen, dass die Steuerungsendgeräte an der Multimediasitzung teilnehmen, oder wenn die Multimediakommunikation zwischen dem gesteuerten Endgerät und den Steuerungsendgeräten durchgeführt wird,
das Hinzufügen von Endgeräten umfasst, die durch die Steuerungsendgeräte der Multimediasitzung gemäß einer Endgeräthinzufügungsanfrage, die durch die Steuerungsendgeräte gesendet worden ist, hinzugefügt werden müssen, wobei die Endgeräte, die durch die Steuerungsendgeräte hinzugefügt werden müssen, Steuerungsendgeräte oder gesteuerte Endgeräte sind, und sich die Endgeräte, die durch die Steuerungsendgeräte hinzugefügt werden müssen, nicht in anderen Multimediasitzungen befinden, bevor ermöglicht wird, dass sie an der Multimediasitzung teilnehmen.

8. Mehrfach-Endgerät-Kommunikationsvorrichtung, umfassend:
ein Multimedia-Verbindungsmodul, das zum Empfangen eines Multimediarufs, der durch ein gesteuertes Endgerät oder durch eine Mehrzahl von Steuerungsendgeräten initiiert worden ist, und zum Ermöglichen, dass das gesteuerte Endgerät und die Steuerungsendgeräte gemäß dem Multimediaruf an einer Multimediasitzung teilnehmen und diese aufzeichnen, ausgebildet ist,
wobei die Steuerungsendgeräte in einer Verbindungsbeziehung mit dem gesteuerten Endgerät stehen; und
ein Datenverarbeitungsmodul, das zum Durchführen einer Multimediakommunikation zwischen dem gesteuerten Endgerät und den Steuerungsendgeräten ausgebildet ist,
wobei die Steuerungsendgeräte eine Multimediakommunikation mit dem verbundenen gesteuerten Endgerät durchführen und relevante Informationen über das gesteuerte Endgerät erfassen, wobei die relevanten Informationen Echtzeitinformationen, Multimedia-Kommunikationsaufzeichnungen und Statusinformationen der gesteuerten Endgeräte sind,
wobei die Multimediakommunikationsaufzeichnungen Echtzeitinformationen über das gesteuerte Endgerät und die Steuerungsendgeräte umfassen,
wobei der Multimediaruf so ausgebildet ist, dass er eine Teilnahme an der Multimediasitzung abruft, bei der es sich um einen Kanal handelt, der zur Durchführung einer Multimediakommunikation verwendet wird, und die Multimediakommunikation ein Kommunikationsmodus ist, der eine Mehrzahl von Teilen von Multimediainformationen in einer Datenform und/oder Textform gleichzeitig in einem Rufvorgang bereitstellen kann, wobei die Medieninformationen in der Datenform Echtzeitpositionsdaten des gesteuerten Endgeräts sind,
und wobei die Steuerungsendgeräte und das gesteuerte Endgerät im Vorhinein registriert werden und jedes der Mehrzahl von Steuerungsendgeräten im Vorhinein mit dem gesteuerten Endgerät verbunden wird.

9. Vorrichtung nach Anspruch 8, bei der das Multimedia-Verbindungsmodul ferner so ausgebildet ist, dass dann, wenn bestimmt wird, dass sich das gesteuerte Endgerät in einer Multimediasitzung befindet, ermöglicht wird, dass die Steuerungsendgeräte an der Multimediasitzung teilnehmen.

10. Vorrichtung nach Anspruch 8, bei der das Multimedia-Verbindungsmodul ferner so ausgebildet ist, dass dann, wenn bestimmt wird, dass sich das gesteuerte Endgerät nicht in einer Multimediasitzung befindet, eine Multimediasitzung erstellt wird, so dass ermöglicht wird, dass das gesteuerte Endgerät und die Steuerungsendgeräte an der erstellten Multimediasitzung teilnehmen.

11. Vorrichtung nach Anspruch 8, bei der das Datenverarbeitungsmodul ferner zum
Senden von Echtzeitinformationen von dem gesteuerten Endgerät zu den Steuerungsendgeräten gemäß einer Anfrage für die Echtzeitinformationen von den Steuerungsendgeräten ausgebildet ist, wobei die Echtzeitinformationen eines oder mehrere von Videoinformationen, Audioinformationen und Positionsinformationen umfassen.

12. Vorrichtung nach Anspruch 11, die ferner ein Positionierungsmodul umfasst, das zum Empfangen von Positionsparametern des gesteuerten Endgeräts und zum Erfassen von Positionsinformationen des gesteuerten Endgeräts von den Positionsparametern ausgebildet ist.

13. Vorrichtung nach Anspruch 11, bei der das Multimedia-Verbindungsmodul ferner zum Aufzeichnen der Echtzeitinformationen des gesteuerten Endgeräts bis zum Ende der Multimediakommunikation ausgebildet ist.

14. Vorrichtung nach Anspruch 8, bei der das Multimedia-Verbindungsmodul ferner zum Hinzufügen der Endgeräte ausgebildet ist, die durch die Steuerungsendgeräte der Multimediasitzung gemäß einer Endgeräthinzufügungsanfrage, die durch die Steuerungsendgeräte gesendet worden ist, hinzugefügt werden müssen, wobei die Endgeräte, die durch die Steuerungsendgeräte hinzugefügt werden müssen, Steuerungsendgeräte oder gesteuerte Endgeräte sind, und sich die Endgeräte, die durch die Steuerungsendgeräte hinzugefügt werden müssen, nicht in anderen Multimediasitzungen befinden, bevor ermöglicht wird, dass sie an der Multimediasitzung teilnehmen.

15. Computerspeichermedium, in dem Anweisungen gespeichert sind, die, wenn sie ausgeführt werden, bewirken, dass mindestens ein Prozessor das Mehrfach-Endgerät-Kommunikationsverfahren nach einem der Ansprüche 1 bis 7 ausführt.

## Revendications

1. Procédé de communication à terminaux multiples, comprenant :
la réception d'un appel multimédia initié par un terminal commandé ou par une pluralité de terminaux de commande (S310) ;
l'autorisation au terminal commandé et aux terminaux de commande de participer à et d'enregistrer une session multimédia selon l'appel multimédia, dans lequel les terminaux de commande sont en relation de liaison avec le terminal commandé (S320) ; et
la réalisation d'une communication multimédia entre le terminal commandé et les terminaux de commande (S330),
dans lequel les terminaux de commande réalisent une communication multimédia avec le terminal commandé lié, et acquièrent des informations pertinentes concernant le terminal commandé, les informations pertinentes étant des informations en temps réel, des enregistrements de communication multimédia et des informations d'état des terminaux commandés,
dans lequel les enregistrements de communication multimédia comportent des informations en temps réel du terminal commandé et des terminaux de commande,
dans lequel l'appel multimédia est configuré pour demander de participer à la session multimédia qui est un canal utilisé pour réaliser une communication multimédia, et la communication multimédia est un mode de communication qui peut fournir de multiples éléments d'informations de support sous forme de données et/ou sous forme de texte, simultanément dans un processus d'appel, les informations de support sous forme de données étant des données de localisation en temps réel du terminal commandé,
et dans lequel les terminaux de commande et le terminal commandé sont inscrits à l'avance, et chacun de la pluralité de terminaux de commande est lié au terminal commandé à l'avance.

2. Procédé selon la revendication 1, comprenant en outre : avant l'autorisation aux terminaux de commande de participer à la session multimédia,
lorsqu'il est déterminé que le terminal commandé est dans une session multimédia, l'autorisation aux terminaux de commande de participer à la session multimédia.

3. Procédé selon la revendication 1, comprenant en outre : avant l'autorisation aux terminaux de commande de participer à la session multimédia,
lorsqu'il est déterminé que le terminal commandé n'est pas dans une session multimédia, l'établissement d'une session multimédia de façon à autoriser le terminal commandé et les terminaux de commande à participer à la session multimédia établie.

4. Procédé selon la revendication 1, comprenant en outre : lors de la réalisation de la communication multimédia entre le terminal commandé et les terminaux de commande,
l'envoi d'informations en temps réel du terminal commandé aux terminaux de commande selon une demande des informations en temps réel provenant des terminaux de commande, dans lequel les informations en temps réel comprennent une ou plusieurs parmi : des informations vidéo, des informations audio et des informations de localisation.

5. Procédé selon la revendication 4, dans lequel les informations de localisation du terminal commandé sont des informations de localisation acquises à partir de paramètres de localisation du terminal commandé.

6. Procédé selon la revendication 4, comprenant en outre : après l'autorisation au terminal commandé de participer à la session multimédia,
l'enregistrement des informations en temps réel du terminal commandé jusqu'à la fin de la communication multimédia.

7. Procédé selon la revendication 1, comprenant en outre : après l'autorisation aux terminaux de commande de participer à la session multimédia, ou lors de la réalisation de la communication multimédia entre le terminal commandé et les terminaux de commande,
l'ajout de terminaux dont l'ajout est requis par les terminaux de commande à la session multimédia selon une demande d'ajout de terminal envoyée par les terminaux de commande, dans lequel les terminaux dont l'ajout est requis par les terminaux de commande sont des terminaux de commande ou des terminaux commandés, et les terminaux dont l'ajout est requis par les terminaux de commande ne sont pas dans d'autres sessions multimédias avant d'être autorisés à participer à la session multimédia.

8. Dispositif de communication à terminaux multiples, comprenant :
un module de participation multimédia configuré pour : recevoir un appel multimédia initié par un terminal commandé ou par une pluralité de terminaux de commande, autoriser le terminal commandé et les terminaux de commande à participer à et enregistrer une session multimédia selon l'appel multimédia,
dans lequel les terminaux de commande sont dans une relation de liaison avec le terminal commandé ; et
un module de traitement de données configuré pour réaliser une communication multimédia entre le terminal commandé et les terminaux de commande,
dans lequel les terminaux de commande réalisent une communication multimédia avec le terminal commandé lié, et acquièrent des informations pertinentes concernant le terminal commandé, les informations pertinentes étant des informations en temps réel, des enregistrements de communication multimédia et des informations d'état des terminaux commandés,
dans lequel les enregistrements de communication multimédia comportent des informations en temps réel du terminal commandé et des terminaux de commande,
dans lequel l'appel multimédia est configuré pour demander de participer à la session multimédia qui est un canal utilisé pour réaliser une communication multimédia, et la communication multimédia est un mode de communication qui peut fournir de multiples éléments d'informations de support sous forme de données et/ou sous forme de texte, simultanément dans un processus d'appel, les informations de support sous forme de données étant des données de localisation en temps réel du terminal commandé,
et dans lequel les terminaux de commande et le terminal commandé sont inscrits à l'avance, et chacun de la pluralité de terminaux de commande est lié au terminal commandé à l'avance.

9. Dispositif selon la revendication 8, dans lequel le module de participation multimédia est en outre configuré pour : lorsqu'il est déterminé que le terminal commandé est dans une session multimédia, autoriser les terminaux de commande à participer à la session multimédia.

10. Dispositif selon la revendication 8, dans lequel le module de participation multimédia est en outre configuré pour : lorsqu'il est déterminé que le terminal commandé n'est pas dans une session multimédia, établir une session multimédia de façon à autoriser le terminal commandé et les terminaux de commande à participer à la session multimédia établie.

11. Dispositif selon la revendication 8, dans lequel le module de traitement de données est en outre configuré pour :
envoyer des formations en temps réel du terminal commandé aux terminaux de commande selon une demande des informations en temps réel provenant des terminaux de commande, dans lequel les informations en temps réel comprennent une ou plusieurs parmi : des informations vidéo, des informations audio et des informations de localisation.

12. Dispositif selon la revendication 11, comprenant en outre un module de positionnement configuré pour : recevoir des paramètres de localisation du terminal commandé, et acquérir des informations de localisation du terminal commandé à partir des paramètres de localisation.

13. Dispositif selon la revendication 11, dans lequel le module de participation multimédia est en outre configuré pour : enregistrer les informations en temps réel du terminal commandé jusqu'à la fin de la communication multimédia.

14. Dispositif selon la revendication 8, dans lequel le module de participation multimédia est en outre configuré pour : ajouter des terminaux dont l'ajout est requis par les terminaux de commande à la session multimédia selon la demande d'ajout de terminal envoyée par les terminaux de commande, dans lequel les terminaux dont l'ajout est requis par les terminaux de commande sont des terminaux de commande ou des terminaux commandés, et les terminaux dont l'ajout est requis par les terminaux de commande ne sont pas dans d'autres sessions multimédias avant d'être autorisés à participer à la session multimédia.

15. Support de stockage par ordinateur dans lequel sont stockées des instructions qui, lorsqu'elles sont exécutées, amènent au moins un processeur à réaliser le procédé de communication à terminaux multiples tel que revendiqué dans l'une quelconque des revendications 1 à 7.
